# EUROPEAN PATENT APPLICATION

(11) **EP 3 098 155 A1**
(43) Date of publication of application: **30.11.2016**
(21) Application number: 15169093.0
(22) Date of filing: 25.05.2015
(51) Int. Cl.: B62M 3/08

(54) **USER ADJUSTABLE BICYCLE PEDAL FITTING DEVICE**

(71) Applicant: Trident Industri AB, 262 72 Ängelholm (SE)
(72) Inventor: Ceric, Enes, SE-254 61 Helsingborg (SE); Johansson, Hans Bertil Peter, SE-265 31 Åstorp (SE)
(74) Representative: Bergentall, Annika Maria

(57) **Abstract**

The present invention relates to a bicycle pedal mountable, and to a user adjustable, bicycle pedal fitting device (1), applicable to any kind of bicycle, regardless of its number of wheels, and regardless of the number of bicyclists it being aimed for. Said pedal fitting device (1) comprise a base or a base plate (2), having on the one hand fixation means (13, 15) for the fixation of said pedal fitting device to any kind of conventional or ordinary bicycle pedal structure and on the other hand having rear and side support means (3, 8), providing restraint to possible movement of a shoe for a human foot, to be inserted into such a bicycle pedal fitting device (1), which support means (3, 8) preferably also comprise strap mounts (10) aimed for fitting of any kind of fixation straps for the fixation of said shoe in relation to the bicycle pedal thereby enabling easy pedaling. At least two of the support means (3, 8) are provided in the form of individual in the same planar direction as the pedal itself sidewards or backwards extending console parts (8), having each a slidable part, slidable in relation to the base plate (2) and thereafter being fixable thereto, with the support means in close contact with the shoe and the console part (8) in close contact with the base plate (2) having a perfect fit thereto.

## Description

### Technical field

The present invention relates to a to a bicycle pedal mountable and to a user adjustable bicycle pedal fitting device, preferably for disabled like strokestruck or people suffering from disablement for other reasons, applicable to any kind of bicycle, regardless of its number of wheels, and regardless of the number of bicyclists the actual bicycle being aimed for, said pedal fitting device comprising a base or a base plate, having on the one hand fixation means for the fixation of said pedal fitting device to any kind of conventional or ordinary bicycle pedal structure and on the other hand having rear and side support means, providing restraint to possible movement of a shoe for a human foot to be inserted in such a bicycle pedal fitting device, which support means preferably also comprise strap mounts aimed for fitting of any kind of fixation straps for the fixation of such a shoe in relation to the bicycle pedal thereby enabling easy pedaling

### Technical problem

Technical devices of this or similar kinds suffer from a common very irritating issue, namely the fact that they in order to be possible to be used by a certain amount of users, has to be made to fit the largest possible shoe. This leads to a misfit situation for a number of users having smaller shoes, who although the use of strap mounts of different kinds, such as Velcro^{®}-strips for the adaptation to different sizes of shoes, is quite common, do not get the joy out of their bicycling as is the purpose. Misfits leads to dissatisfaction from the users and may in certain cases lead to different kinds of anatomic damages to the users due to different kinds of overloading in turn due to over-tensioning of ligaments and joints.

### State of the Art

Devices for adapting bicycle pedals for disabled or elderly people of today are all either extremely simple designs made from injection molded ABS-plastic being easily crashed for example when taxing such bicycles to their users, since such bicycles often lack common freewheeling, which results in expensive exchanges when a spare have to be purchased and fitted due to user related damages, or metallic quite complex and therefore expensive items often difficult or impossible to adapt to different sizes of shoes. This often make the "threshold" too high to get over when staff need to engage themselves "too much", which results in that many disabled or elderly people never gets out on a bike ride even if it as such can give such nice relaxation.

### Object of the invention

A main object with the present invention therefore lies in achieving a simple yet sturdy bicycle pedal fitting device that I all aspects is adaptable to the shoesize of the user of the bicycle so that the riding of a bicycle will become joyful as it should and not painstaking and painful, literally speaking "a pain in the ass".
According to the invention at least two of the support means are provided in the form of individual in the same planar direction as the pedal itself sidewards or possibly also backwards extending console parts, having each a slidable part, slidable in relation to the base plate and thereafter being fixable, with the support means in close contact with the shoe and the console part in close contact with the base plate having a perfect fit to each console part.

In a further developed embodiment of the invention it comprise friction enhancing means, such as a slightly ruffened surface, between each console part and the fixation plates. Thereby the functionality and reliability of the device is enhanced.

A specific property of the preferred embodiment of the present invention lies in the fact that the base plate, console parts, fixation plates etc. are made from laser cut pieces of preferably stainless steel. The cut pieces are thereafter bent or punched at specific sites to its correct shape. It will be extremely cost efficient and fast to establish a serial production of pedal fitting devices being developed in this fashion.

In another further developed embodiment of the invention the base plate is made adjustable with regard to its length position in relation to the bicycle pedal to which it is fitted, to thereby provide for a correct anatomical force application from the user of the bicycle when pedalling. This is made by providing the joints of mount of the pedal fitting device with elongated tracks in which the bolt joints keeping the pedal fitting device to the pedal can be slid before tensioning the screw joints of the mount. This adaptation will greatly improve the joy of cycling for people having to use these means of help, since the attack point of the pedaling force may be adjusted to each user.

According to a yet further developed embodiment of the invention all side support means of the pedal fitting device are adjustably arranged. The flexibility of the device is hereby substantially increased in that it becomes fully adaptable to the most even misfit feet and thereby shoes. It should also in this context be mentioned that also the heel support, that according to the described preferred embodiment is fixed, may be adjustably arranged in practically the same way as the side support means. As an extra measure the rear console part include an extra fixation possibility for a fixation strap aimed to adapt the device, mainly aimed for shoe-sizes of 36-47, to smaller sizes by providing an adjustable heel support.

The device according to the invention also provide the possibility to make fitting adjustments at least four positions, this in combination with the fact that point of attack of the pedaling force is adjustable, solves an until now unsolved technical problem by providing a uniquely adaptable construction to which there has been a long felt need. If needed the device might very easily be provided with a support for the calf of the leg, there being several screw joints on the underside of the device for a possible good fixation of such a support.

### Description of the drawings

The invention will in the following be described with reference to drawings of a presently preferred embodiment of the invention, in which:
Fig 1 shows a device according the invention for a left foot in a perspective view slightly from above,
Fig 2 shows the same embodied device as according to fig 1 as an exploded side view slightly from above perpendicularly to its main extension,
Fig 3 again shows the device as a perspective view, here from the bottom side thereof, where it is to be fitted to a bicycle pedal,
Fig 4 shows the same embodiment of the invention as a pure sideview,
Fig 5 shows the embodiment of the invention as a perpendicular perspective view, slightly from above, and finally
Fig 6 shows the embodiment as a pure sideview from below.

### Detailed description of an Exemplary Embodiment

Throughout the whole description words as upper, lower, above and below are intended to have their ordinary meaning when the device according to the invention is vertically arranged, that is when the longitudinal extension of the pedal fitting device is substantially horizontal.

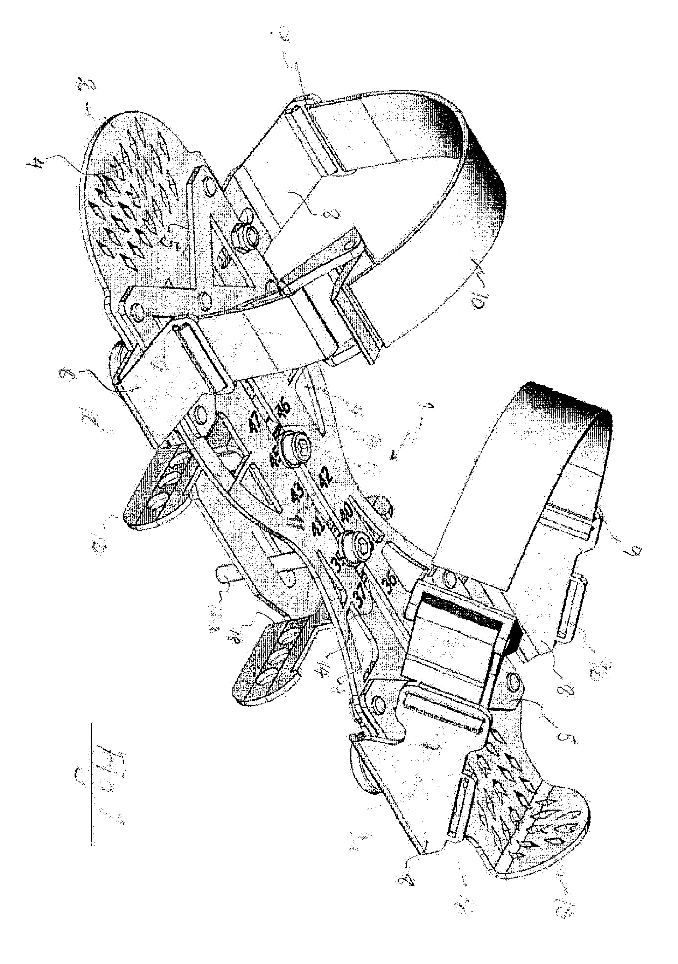

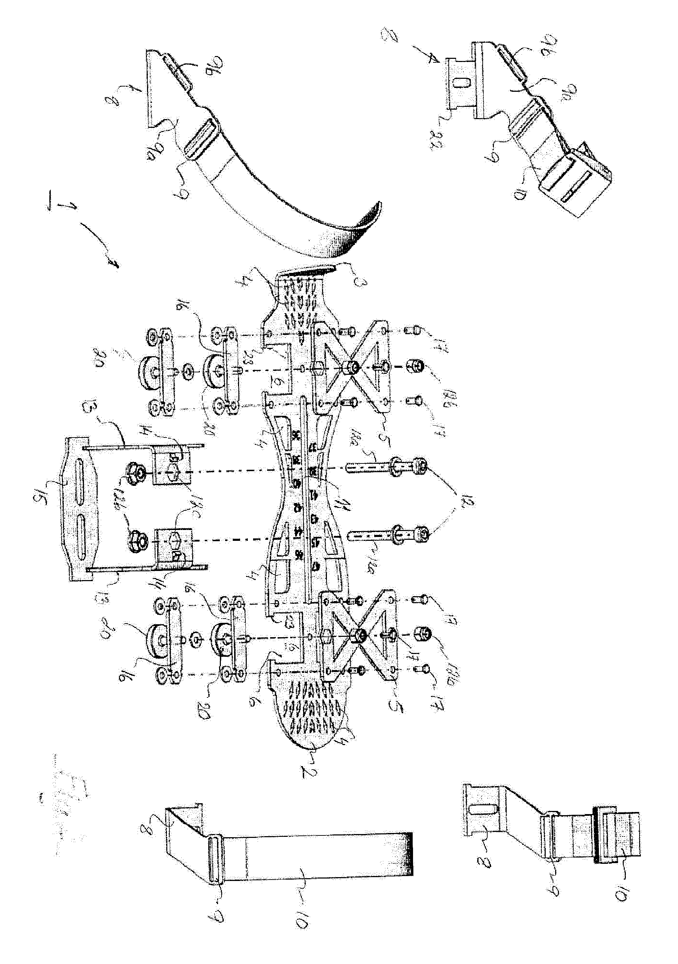

Fig 1 illustrates a complete pedal fitting device 1 according to the invention, here shown in perspective from its front and from above. The device 1 comprice a base plate 2, which apart from its rear end, which is bent upwards to establish a heel support 3, is fully planar. The base plate is in its preferred embodiment manufactured by laser cutting in one piece from durable stainless steel in a thickness of 2mm:s. This enables for different patterns of knockouts 4 either as here for bolt or rivet joints or simply as is also shown simply for lightening purposes. Cutout double-arrow shaped fixation plates 5 are fixedly attached by rivets to the upper side base plate 1, one at the front end part and one at the rear end part of the base plate 2 of the device 1. Specific cutouts 6 (better shown in fig 2) made to the base plate, create together with the fixation plates 5, guides or tracks for slideably fixed console parts or fixation elements 8 to which fixation straps 9 are fixed. Said console fixation elements 8 are each with regard to their sideways extension, adjustably fixed to the fixation plates 5 by means of a screw joint, comprising a locking nut. It should, however, in this context be noted that other kinds of fixation might come into question, such as weld-bolts fastened to the below side of the fixation plates, then quite obviously co-operating with some kind of nut on the below side of each console part 8. Each console part 8, comprise at their outer end away from the base plate 2, a slit 9 arranged transversely relative to the main extension of each console part 8. The slits 9 are arranged to occupy fixation straps 10. The most forward console parts 8 are arranged perpendicularly to the base plate 2, while the rearward console parts certainly still being fixed to the base plate 2 in the same fashion as the forward one has a slightly forward (on or around 45°) leaning extension 9a for its slit 9 to give it the possibility to press the foot of its user towards the heel support 3. Said rearward console parts may also have a slit 9b, more or less perpendicular to the slit 9, consequently facing rearwards at a suitable angle of between 25 and 55° to the base plate 2. If a fixation strap of the same kind as the other straps is applied to the slit 9b, the device 1 will easily be adaptable aslo for shoe sizes below the size of 36. Along the length of the base plate 2, the same has an elongated slit 11 for taking up a couple of bolt joints 12 enabling for adjustment of the position of the pedal fixation device in its length direction in relation to a pedal of a bicycle to which it is to be fitted. The reason for this adjustability is that the pedal force application point should be adjustable due to differences of personal or medical reasons. Below the base plate 2, a couple of perpendicularly bent fixation elements 13 are arranged supposed to be fixed to a pedal of a bicycle using a fairly long bolt 12a. Said long bolts 12a are fixed to the pedal fixation device 1 using conventional hexagonally shaped flange nuts 12b, which have been turned upside down as compared to its normal use to thereby fit into hexagonally shaped holes made in the fixation elements 13 (see Fig 2). Said long bolts 12a, conveniently having an insex or torx fitting, may thereby be tightened using only one tool from the upper side of the base plate 2. The fixation elements 13 may also comprise punched parts 14, supposed to co-operate with the long bolts 12a and the slit 11 in making the fixation elements slidable along the elongated slit 11, once the bolts have been tightened just enough to not let the punched parts escape from the slit 11. Finally the pedal fixation device also has a counterpart 15, more or less having the functionality of a bearing cover of an internal combustion engine, by which it is supposed to be tightened together around a bikepedal using preferably the same kind of flange nuts 12b as is used on the same bolt to fix the fixation elements 13 to the base plate 2.

According to fig 2 an exploded side view is shown, depicting in greater detail all the elements of the device according to the invention. One of these details are the fixation plates 5, which are arranged at the top surface of the base plate 2 using plates 16 at the below surface of the base plate 2, the whole package being kept together using rivets 17. Another detail that more clearly is shown in fig 2 are the shape of the cutouts 6 of the base plate. The shape of the cutouts 6 are co-operatingly shaped relative to the parts of the console parts 8 co-operating therewith, specifically so that the shape of the cut-outs 6 create stops 7 for the console parts 8, stopping these from falling out of their respective in-line positions in the cutouts 6.

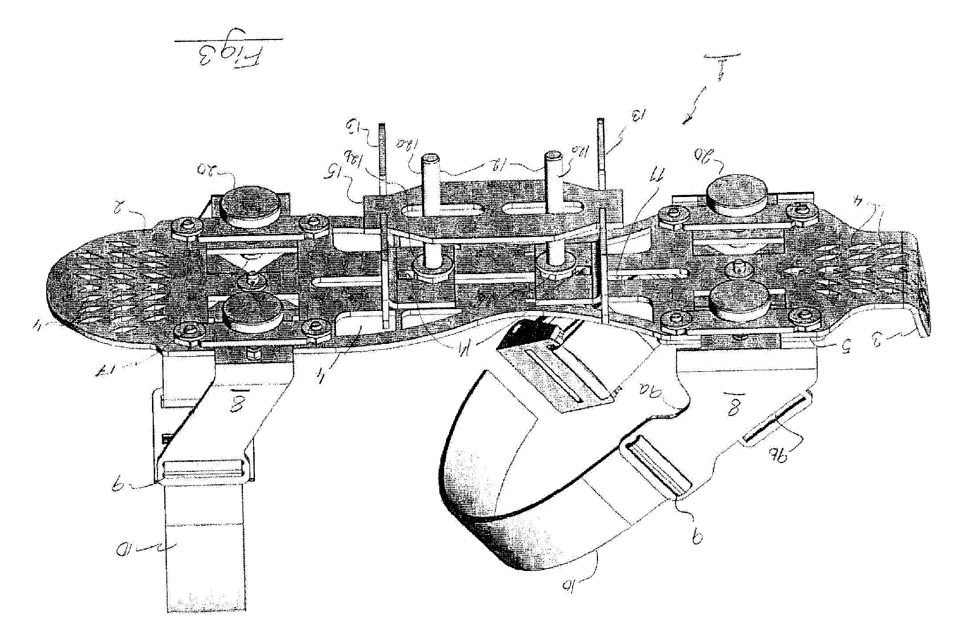

Moreover fig 3 elucidates the co-operation between the fixation elements 13, the hexagonal nuts 12b on their bolts 12 and the counterpart 15. The fixation elements 13 comprise cutouts 18 limiting the movability of the outer ends 19 of the respective counterparts 15, once they are in engagement with the fixation elements 13 though screwing in the respective further nuts (hexagonal flange nuts of the same kind as nuts 12b) onto the long bolts 12, to grip around and eventually become fixed to an existing pedal of said bicycle. By the nature of the fixation unit, being comprised of each of the long bolts 12a and two identical hexagonally shaped flange nuts 12b, it should be realized that the joint represented by each of these just named combinations of machine elements will become easily adjustable in the length direction of the device by only releasing, adjusting and retightening the insex bolt 12a from the upper side of the device.

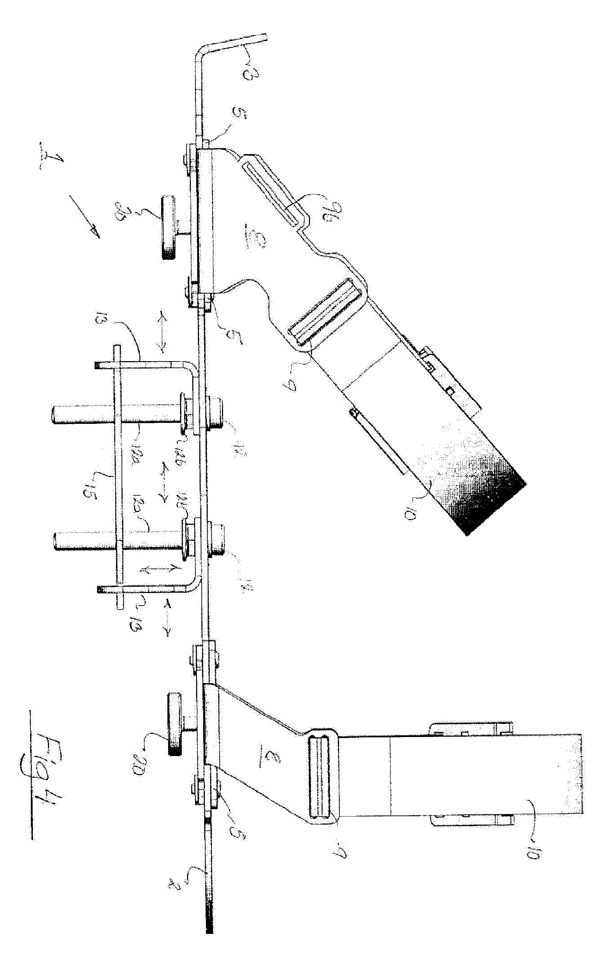

Fig 4 even more clearly shows how the fixation of the bolt joints 12 works to compress the fixation elements 13 and its counterpart 15 around a pedal of a bicycle (not shown). This figure also clearly shows how the console parts 8 are fixed to the base plate 2, the fixation plates 5 and the plates 16 respectively by the use of tripod-screws 20, for ease of use. In this context it should be mentioned that there are one more possible adjustability of the device, which is not shown, however, nevertheless possible. This relates to the heel support 3, which may in the same fashion as each of the console parts 8 be made adjustable making the fixation strap more or less unnecessary since then the device then may in advance before use, be adjusted to the correct foot length.

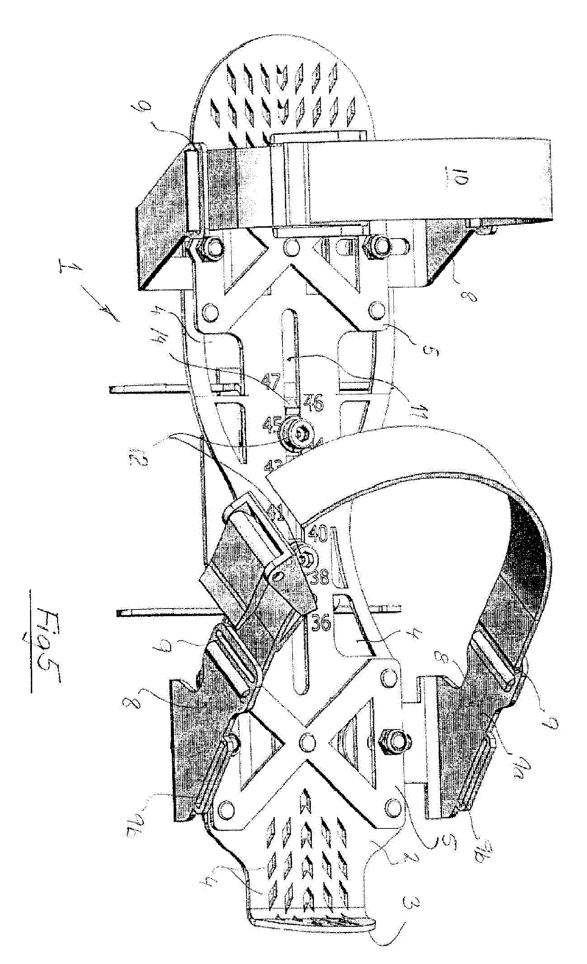

Fig 5 in its turn clearly visualizes the adjustability of the console parts 8 to the width of the shoe of the present user of the bicycle. By a simple twist to the tripod screws, the console parts 8 are easily loosened to make them moveable sideways. Another simple twist of the tripod-screw in the opposite direction fixes the respective console part firmly again and the device is adjusted to a specific shoe of a specific user.

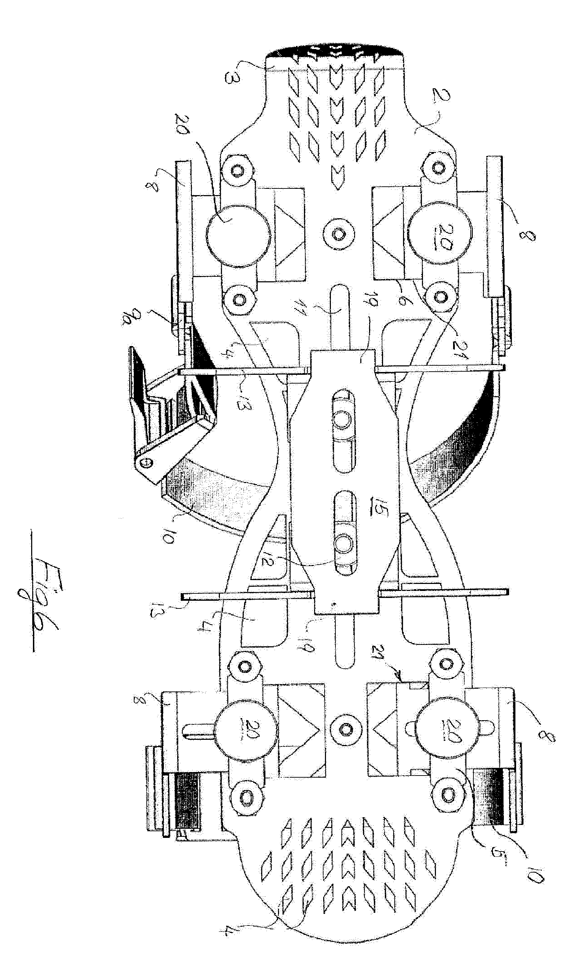

Finally Fig 6 shows the device in a view from below. Especially the shape of the counterpart 15 is clearly shown and how the outer ends 19 thereby are able to co-operate with the fixation elements 13. At 21 it is clearly shown how protrusions 22 at outer ends of each console part 8 co-operate with the specific cut-outs 6 of the base plate 2 and protrusions 23 at the outer ends of each of the specific cut-outs 6. When each joint held together by the associated tripod screws 20 are loosened axially less than 2mm, this co-operation leads to a possible linear moveabilty of the respective console parts 8.

In order to further elucidate the performance of the device according to the invention, this will more in detail be described hereinafter. In use the pedal fitting device 1 is easily mounted to any conventional bicycle pedal by dismounting a flange nut (not shown) arranged at the end of each long bolt 12a, making it possible to remove the counterpart 15 from the device 1, thus to make it possible to bring the rest of the pedal fitting device 1 onto said pedal (not shown). Preferably the position of the fixation elements 13 are during this procedure adjusted to fit the shoe size and other pre-conditions of the person that in a moment is to use the bicycle. When the fixation elements 13 are in place around the pedal, the counterpart 15 is repositioned and its nuts are again fixed, now with tension against the underside of the pedal. Now, the pedal fitting device 1 also has to be adjusted with regard to its width. This can be made either before fitting the device 1 to the pedal or afterwards. Anyhow, this adjustment has to be made according to a shoe that is to be worn by a user of the pedal fitting device. Adjustment is done by first loosening all four of the tripod screws 20 to such an extent that a gap of 2mm:s at the maximum is created in the joint comprising the tripod screws. The console parts thereby becomes movable perpendicularly to the base plate 2 and in the same plane as the latter. It is now time for the insertion of the shoe, and if possible the same should if possible be "installed" with the front of the shoe (ie. the toes of the user) pointing in the direction of travel, if for some reason the users shoe or shoes and thereby his or hers foot/feet is/are not conform with regard to its' length. In such cases the device may to some extent be adapted to create a trapezoid as seen in the plane of the base plate 2. Having by now adapted the pedal fitting device to the bicycle pedal, the user and his, her shoe, it is now, finally time to put the foot with its shoe onto the base plate, and there by the use of the fixation straps 10 fix the shoe to the device 1 whereafter the joy begins, comfortable bicycling is again possible for the person by use of the device 1.

Additionally, variations to the disclosed embodiment can be understood and effected by the skilled addressee in practicing the claimed invention, from a study of the drawings, the disclosure, and the appended claims. In the claims, the word "comprising" does not exclude other elements or steps, and the indefinite article "a" or "an" does not exclude plurality. A single processor or other unit may fulfill the functions of several items recited in the claims. The mere fact that certain measures are recited in mutually different dependent claims does not indicate that a combination of these measures cannot be used to advantage.

## Claims

1. A to a bicycle pedal mountable and to a user adjustable bicycle pedal fitting device (1), applicable to any kind of bicycle, regardless of its number of wheels, and regardless of the number of bicyclists it being aimed for, said pedal fitting device (1) comprising a base or a base plate (2), having on the one hand fixation means for the fixation of said pedal fitting device to any kind of conventional or ordinary bicycle pedal structure and on the other hand having rear and side support means, providing restraint to possible movement of a shoe for a human foot, to be inserted in such a bicycle pedal fitting device, which support means preferably also comprise strap mounts aimed for fitting of any kind of fixation straps for the fixation of said shoe in relation to the bicycle pedal thereby enabling easy pedalling,
**characterized in that**, at least two of the support means are provided in the form of individual in the same planar direction as the pedal itself, sidewards or backwards extending console parts (8), having each a slidable part, slidable in relation to the base plate and thereafter being fixable thereto, with the support means in close contact with the shoe and the console part (8) in close contact with the base plate (2) having a perfect fit thereto.

2. Bicycle pedal fitting device according to claim 1, **characterized in that**, it comprise friction enhancing means (not shown) between each console part (8) and the fixation plates (5) to let bolt or screw joints (12, 20) between these parts provide support for a friction fit between each slideable part and its fixation plate.

3. Bicycle pedal fitting device according to claim 1 or 2, **characterized in that**, the base plate (2) and console parts (8) each are made from laser cut single pieces each thereafter bent to the correct shape.

4. Bicycle pedal fitting device according to anyone of the preceeding claims, **characterized in that**, each part of the device (2, 5, 8, 15) formed from plate sheet steel is made from at least 2 mm thick stainless steel.

5. Bicycle pedal fitting device according to anyone of the preceeding claims, **characterized in that**, the base plate (2) is made adjustable with regard to its length position in relation to the bicycle pedal to which it is fitted, to thereby provide for a correct anatomical force application from the user of the bicycle when pedalling.

6. Bicycle pedal fitting device according to anyone of the preceeding claims, **characterized in that**, the console parts (8) all are adjustable, whereby all kinds and shapes of normal sized shoes (European sizes 36-47) and even greater may be accommodated within said device.

7. Bicycle pedal fitting device according to anyone of the preceeding claims, **characterized in that**, the rear support means (3) is arranged as fixed such means, being bent from a part of the base plate.

8. Bicycle pedal fitting device according to anyone of claims 1 to 6, **characterized in that**, the rear support means is adaptable by the provision of a fixation strap exteding between the rear side supports of the device and around the heel part of a shoe placed in the device, said fixation strap being constrainable to thereby accommodate for a smaller shoe than otherwise would be possible.

9. Bicycle pedal fitting device according to anyone of the preceeding claims, **characterized in that**, each of the console parts (8) providing for the size adjustability of the device (1), are fixed to the base plate using a screw or bolt joint (12, 20) to tie each console part (8) to the base plate (2) to establish said friction fit.

10. Bicycle pedal fitting device according to claim 9,
**characterized in that**, said screw or bolt joint (12, 20) is built from a locknut loosely fit in a hexagonally shaped hole in the base plate and a tripod screw fit to said locknut from under said base plate.
